(19) Europäisches Patentamt
European Patent Office
Office européen des brevets

(11) **EP 4 447 182 A1**

(12) **EUROPEAN PATENT APPLICATION**
published in accordance with Art. 153(4) EPC

(43) Date of publication:
**16.10.2024 Bulletin 2024/42**

(21) Application number: **22904145.4**

(22) Date of filing: **01.12.2022**

(51) International Patent Classification (IPC):
*H01M 10/0569* (2010.01)     *H01M 4/133* (2010.01)
*H01M 4/136* (2010.01)        *H01M 4/58* (2010.01)
*H01M 4/587* (2010.01)        *H01M 4/62* (2006.01)
*H01M 10/052* (2010.01)       *H01M 10/0567* (2010.01)
*H01M 10/0568* (2010.01)

(52) Cooperative Patent Classification (CPC):
H01M 4/133; H01M 4/136; H01M 4/58;
H01M 4/587; H01M 4/62; H01M 10/052;
H01M 10/0567; H01M 10/0568; H01M 10/0569;
Y02E 60/10

(86) International application number:
**PCT/JP2022/044454**

(87) International publication number:
**WO 2023/106214 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2021   JP 2021200301**

(71) Applicant: **Kyocera Corporation
Kyoto-shi, Kyoto 612-8501 (JP)**

(72) Inventors:
• **AKANE, Kanta**
  **Kyoto-shi, Kyoto 612-8501 (JP)**
• **FUKUSHIMA, Takaaki**
  **Kyoto-shi, Kyoto 612-8501 (JP)**
• **TODOKI, Hitomi**
  **Kyoto-shi, Kyoto 612-8501 (JP)**

(74) Representative: **TBK
Bavariaring 4-6
80336 München (DE)**

(54) **ELECTROLYTE SOLUTION, SECONDARY BATTERY AND SEMI-SOLID BATTERY**

(57)     An electrolyte solution contains a lithium electrolyte containing lithium hexafluorophosphate or lithium bis(fluorosulfonyl)imide, a carbonate solvent containing γ-butyrolactone and ethylene carbonate, and an additive containing at least one of maleic anhydride or lithium bis(oxalato)borate. The electrolyte solution contains more γ-butyrolactone than ethylene carbonate.

EP 4 447 182 A1

FIG. 1

**Description**

TECHNICAL FIELD

The present disclosure relates to an electrolyte solution, a secondary battery, and a semisolid battery.

BACKGROUND OF INVENTION

A known technique is described in, for example, Patent Literature 1.

CITATION LIST

PATENT LITERATURE

Patent Literature 1: Japanese Unexamined Patent Application Publication No. 2013-101900

SUMMARY

In an aspect of the present disclosure, an electrolyte solution contains a lithium electrolyte containing lithium hexafluorophosphate, a carbonate solvent containing $\gamma$-butyrolactone and ethylene carbonate, and an additive containing at least one of maleic anhydride or lithium bis(oxalato)borate. The electrolyte solution contains more $\gamma$-butyrolactone than ethylene carbonate.

In an aspect of the present disclosure, an electrolyte solution contains a lithium electrolyte containing lithium bis(fluorosulfonyl)imide, a carbonate solvent containing $\gamma$-butyrolactone and ethylene carbonate, and an additive containing at least one of maleic anhydride or lithium bis(oxalato)borate. The electrolyte solution contains more $\gamma$-butyrolactone than ethylene carbonate.

In an aspect of the present disclosure, a secondary battery contains a negative electrode active material being graphite, and the electrolyte solution according to any one of the above aspects. In an aspect of the present disclosure, a secondary battery contains a positive electrode active material being lithium iron phosphate, and the electrolyte solution according to any one of the above aspects.

In an aspect of the present disclosure, a semisolid battery contains a positive electrode active material and the electrolyte solution according to any one of the above aspects, and a negative electrode active material and the electrolyte solution according to any one of the above aspects.

BRIEF DESCRIPTION OF THE DRAWINGS

The objects, features, and advantages of the present disclosure will become more apparent from the following detailed description and the drawings.

FIG. 1 is a plan view of an example semisolid battery according to an embodiment of the present disclosure.
FIG. 2 is a cross-sectional view taken along line A-A in FIG. 1.

DESCRIPTION OF EMBODIMENTS

An electrolyte solution with the structure that forms the basis of an electrolyte solution according to one or more embodiments of the present disclosure will now be described.

Electrolyte solutions used in lithium-ion batteries have been improved to achieve higher battery characteristics. For example, Patent Literature 1 describes an electrolyte solution that has less deterioration in ionic conductivity in a low temperature environment.

A secondary battery with the structure that forms the basis of a secondary battery according to one or more embodiments of the present disclosure is used as a rechargeable power source for various products including home appliances, information processors, and electric vehicles. Secondary batteries include lithium-ion batteries that use lithium compounds as the electrolyte. Lithium-ion batteries can have high outputs (high voltages) and compact sizes.

Electrolyte solutions used in lithium-ion batteries have been improved to achieve higher battery characteristics. For example, Patent Literature 1 describes an electrolyte solution that can have less deterioration in ionic conductivity in a low temperature environment.

The electrolyte solution with the structure that forms the basis of the electrolyte solution according to one or more embodiments of the present disclosure contains solvents with relatively high volatility such as dimethyl carbonate, diethyl carbonate, and ethyl methyl carbonate. Such solvents volatilize in the battery manufacturing process, thus changing the composition of the electrolyte solution. This may be overcome by selecting solvents with relatively low volatility. The solvents with relatively low volatility include a carbonate solvent being a combination of $\gamma$-butyrolactone and ethylene carbonate. The carbonate solvent with relatively low volatility (low-volatile carbonate-based solvent) volatilizes by a lesser degree, with a smaller composition change of the electrolyte solution.

For an electrolyte solution containing such a low-volatile carbonate-based solvent, lithium hexafluorophosphate or lithium bis(fluorosulfonyl)imide can be used as a lithium electrolyte.

Further, the electrolyte solution containing the low-volatile carbonate solvent in combination with lithium hexafluorophosphate or lithium bis(fluorosulfonyl)imide has properties that vary based on ambient temperature. The electrolyte containing more $\gamma$-butyrolactone than ethylene carbonate in the low-volatile carbonate solvent is less susceptible to ambient temperature. The electrolyte solution containing at least one of maleic anhydride or lithium bis(oxalato)borate as an additive is still less susceptible to ambient temperature.

As described above, the electrolyte solution according to one or more embodiments of the present disclosure contains a lithium electrolyte solution containing lithium hexafluorophosphate or lithium bis(fluorosulfonyl)imide, a carbonate solvent containing $\gamma$-butyrolactone and ethylene carbonate, and an additive containing at least one of maleic anhydride or lithium bis(oxalato)borate. The electrolyte solution contains more $\gamma$-butyrolactone than ethylene carbonate. The electrolyte solution has a smaller composition change resulting from solvent volatilization and can have less variation in the battery characteristics including susceptibility to ambient temperature.

The electrolyte solution according to one or more embodiments of the present disclosure will now be described in detail with reference to the drawings. In one or more embodiments of the present disclosure, the electrolyte solution can be used in any type of lithium-ion battery, which is a secondary battery. For example, the electrolyte solution may be used either in a liquid form in which the electrolyte solution remains as liquid or in a semisolid form in which the electrolyte solution is in the form of a gel or slurry using, for example, polymers.

First Embodiment

Lithium Electrolyte

In the present embodiment, the electrolyte solution contains lithium hexafluorophosphate (LiPF$_6$) or lithium bis(fluorosulfonyl)imide (LiFSI) as a lithium electrolyte. In the present embodiment, the electrolyte solution containing lithium hexafluorophosphate or lithium bis(fluorosulfonyl)imide as a lithium electrolyte solution may contain, for example, other lithium salts that are typically used as lithium electrolytes for electrolyte solutions. In the present embodiment, the electrolyte solution may contain both LiPF$_6$ and LiFSI as lithium electrolytes.

Examples of the other lithium salts include LiBF$_4$ and LiClO$_4$. For the electrolyte solution containing at least one of the other lithium salts in addition to LiFSI, the content of LiFSI may be greater than or equal to 12.4 wt% of the total amount of lithium electrolytes.

In the present embodiment, the lithium electrolyte solution contains LiPF$_6$ alone, contains LiFSI alone, contains LiPF$_6$ and LiFSI, contains LiPF$_6$ and at least one of the other lithium salts described above, or contains LiFSI and at least one of the other lithium salts described above. In either case, the concentration of the lithium-ion electrolyte in the electrolyte solution is, for example, 0.6 to 1.4 mol/L.

In another embodiment of the present disclosure, the lithium electrolyte solution may contain LiPF$_6$, LiFSI, and at least one of the other lithium salts described above. Carbonate-based Solvent

In the present embodiment, the electrolyte solution contains, as a carbonate-based solvent, $\gamma$-butyrolactone and ethylene carbonate. The electrolyte solution contains more $\gamma$-butyrolactone than ethylene carbonate. The solvent in the present embodiment has lower volatility than solvents used in known electrolyte solutions, with a smaller composition change in the manufacturing process. In the carbonate solvent in the present embodiment, the ratio Cb/Ce is, for example, 1.28 to 7.70, where Cb (vol%) is the $\gamma$-butyrolactone content and Ce (vol%) is the ethylene carbonate content.

The electrolyte solution containing $\gamma$-butyrolactone and ethylene carbonate as carbonate-based solvents may contain other solvents that are typically used as solvents for electrolyte solutions. Examples of the other solvents include propylene carbonate, ethylene carbonate, dimethyl carbonate, dimethoxyethane, diethyl carbonate, tetrahydrofuran, and triethylene glycol dimethyl ether. For the electrolyte solution containing at least one of the other solvents in addition to $\gamma$-butyrolactone and ethylene carbonate, the carbonate solvent may have a vapor pressure less than 0.1 kPa at 25 °C.

In the present embodiment, the carbonate solvent contains $\gamma$-butyrolactone and ethylene carbonate or contains $\gamma$-butyrolactone, ethylene carbonate, and at least one of the other solvents described above. In either case, the concentration of the carbonate solvent in the electrolyte solution is, for example, 9.40 to 36.2 wt%.

Additive

In the present embodiment, the electrolyte solution contains at least one of maleic anhydride or lithium bis(oxalato)borate as an additive. In other words, the electrolyte solution contains, as an additive, maleic anhydride alone, lithium bis(oxalato)borate alone, or both maleic anhydride and lithium bis(oxalato)borate.

The electrolyte solution containing maleic anhydride as an additive is less susceptible to ambient temperature and achieves higher battery characteristics (at least one of the capacity retention, the resistance, or the energy efficiency) particularly in a high temperature environment (45 °C). The maleic anhydride content is 0.4 to 1.6 wt% of the entire electrolyte solution.

The electrolyte solution containing lithium bis(oxalato)borate (LiBOB) as an additive is less susceptible to ambient temperature and achieves higher battery characteristics (the capacity retention, the resistance, and the energy efficiency) particularly in a low temperature environment (-25 °C). The lithium bis(oxalato)borate content is 1.0 to 4.0 wt% of the entire electrolyte solution.

As described above, the electrolyte solution containing an additive is less susceptible to ambient temperature. In particular, the electrolyte solution may contain maleic anhydride in a high temperature environment and LiBOB in a low temperature environment. The electrolyte solution containing both maleic anhydride and LiBOB achieves higher battery characteristics in both a high temperature environment and a low temperature environment. For the electrolyte solution containing both maleic anhydride and LiBOB, the LiBOB content is to be higher than the maleic anhydride content.

Second Embodiment

A second embodiment differs from the first embodiment in the solvent. The other components are the same as in the first embodiment. The solvent will be described below. Carbonate-based Solvent

In the present embodiment, a carbonate solvent contains propylene carbonate in addition to $\gamma$-butyrolactone and ethylene carbonate. More specifically, in the present embodiment, the carbonate solvent includes three solvents, or specifically, $\gamma$-butyrolactone, ethylene carbonate, and propylene carbonate. The volume ratio of the solvents in the electrolyte solution is expressed by Formula 1 below, where EC is the volume of ethylene carbonate, GBL is the volume of $\gamma$-butyrolactone, and PC is the volume of propylene carbonate.

$$EC:GBL:PC = 0.5x:(100 - x):0.5x \ (5 \leq x \leq 55) \qquad (1)$$

The electrolyte solution containing, as a carbonate-based solvent, a combination of three solvents, or $\gamma$-butyrolactone, ethylene carbonate, and propylene carbonate, mixed at the volume ratio expressed by Formula 1 achieves higher battery characteristics particularly in a low temperature environment.

Third Embodiment

A third embodiment differs from the first embodiment in the additive. The other components are the same as in the first embodiment. The additive will be described below.

In the present embodiment, the electrolyte solution contains an additive being vinylene carbonate with a content of 1.0 to 6.0 wt%. In the present embodiment, vinylene carbonate is used as an additive in place of maleic anhydride and lithium bis(oxalato)borate. More specifically, the electrolyte solution contains no maleic anhydride and no lithium bis(oxalato)borate, but contains vinylene carbonate as an additive. The electrolyte solution may contain maleic anhydride and lithium bis(oxalato)borate in addition to vinylene carbonate as additives. In other words, the additive contains vinylene carbonate and at least one of maleic anhydride or lithium bis(oxalato)borate. More specifically, the additive contains vinylene carbonate and maleic anhydride, contains vinylene carbonate and lithium bis(oxalato)borate, or contains vinylene carbonate, maleic anhydride, and lithium bis(oxalato)borate. The additive contains vinylene carbonate and may contain no maleic anhydride and no lithium bis(oxalato)borate.

The electrolyte solution containing vinylene carbonate as an additive achieves higher battery characteristics particularly in a room temperature environment.

Fourth Embodiment

A fourth embodiment differs from the first embodiment in the additive. The other components are the same as in the first embodiment. The additive will be described below.

In the present embodiment, the electrolyte solution contains an additive being biphenyl with a content of 1.0 to 4.0 wt%. In the present embodiment, biphenyl is used as an additive in place of maleic anhydride and lithium bis(oxalato)borate. More specifically, the electrolyte solution contains no maleic anhydride and no lithium bis(oxalato)borate, but contains biphenyl as an additive. The electrolyte solution may contain maleic anhydride and lithium bis(oxalato)borate in addition to biphenyl as additives. In other words, the additive contains biphenyl and at least one of maleic anhydride or lithium bis(oxalato)borate. More specifically, the additive contains biphenyl and maleic anhydride, contains biphenyl and lithium bis(oxalato)borate, or contains biphenyl, maleic anhydride, and lithium bis(oxalato)borate. The additive contains biphenyl and may contain no maleic anhydride and no lithium bis(oxalato)borate. The electrolyte solution containing biphenyl as an additive achieves higher battery characteristics particularly in a high temperature environment.

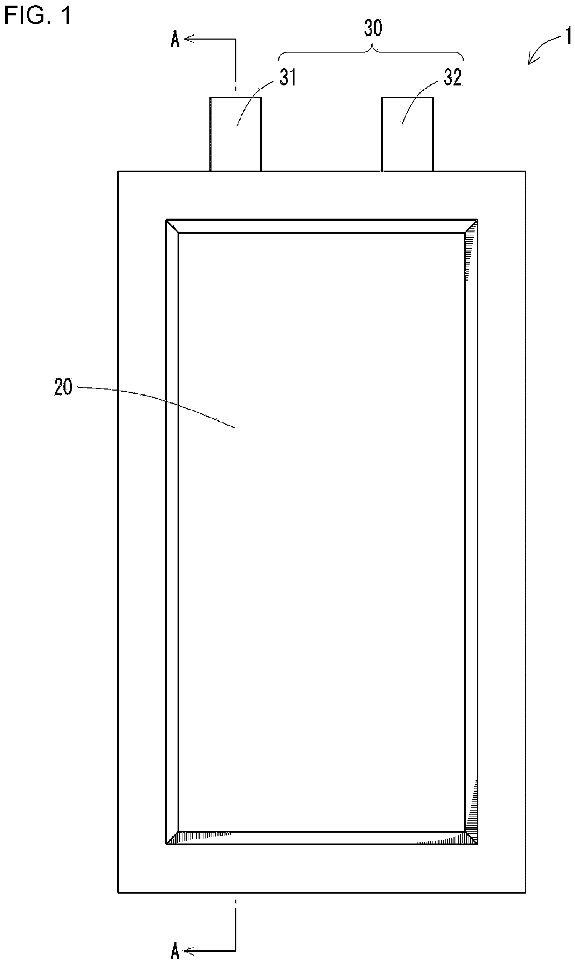

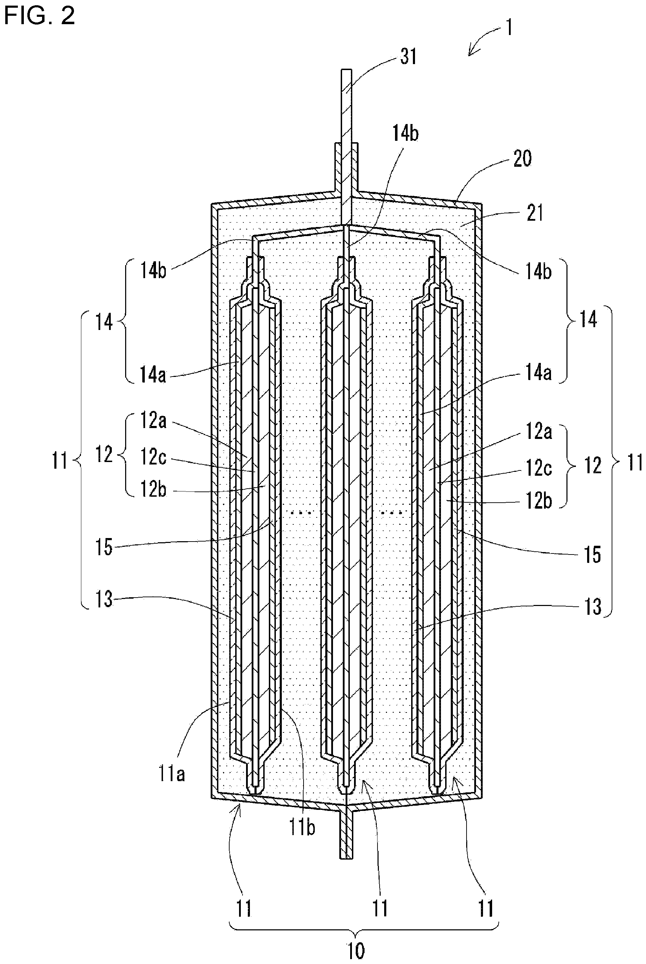

FIG. 1 is a plan view of an example semisolid battery according to an embodiment of the present disclosure. FIG. 2 is a cross-sectional view taken along line A-A in FIG. 1.

In the present embodiment, a semisolid battery 1 includes a cell stack 10 and an outer case 20. The cell stack 10 is a stack of multiple unit cells 11. Each unit cell 11 is plate-like. The unit cell 11 is the smallest unit member functioning as a battery in the semisolid battery 1.

The unit cell 11 has a main surface 11a and the other main surface 11b opposite to the main surface 11a. The unit cell 11 may be, for example, rectangular, square, circular, oval, or in any other shape as viewed in the stacking direction (the lateral direction in FIG. 2, or hereafter simply referred to as a first direction) of the cell stack 10. In the present embodiment, the unit cell 11 is substantially rectangular as viewed in the first direction. The unit cell 11 has, for example, a long side of 50 to 500 mm and a short side of 50 to 300 mm as viewed in the first direction. The unit cell 11 has a thickness of, for example, 0.1 to 2 mm in the first direction.

The unit cell 11 includes an electricity generator 12, a casing 13, a positive electrode terminal 14, and a negative electrode terminal 15. The electricity generator 12 charges and discharges through an electrochemical reaction. The electricity generator 12 includes, for example, a positive electrode 12a, a negative electrode 12b, and a separator 12c between the positive electrode 12a and the negative electrode 12b. The electricity generator 12 can exchange cations and anions between the positive electrode 12a and the negative electrode 12b through the separator 12c. The electricity generator 12 with the positive electrode 12a and the negative electrode 12b electrically connected to an external device can supply electricity to the external device.

The positive electrode 12a contains a positive electrode active material and an electrolyte solution and is electrochemically active. The negative electrode 12b contains a negative electrode active material and the electrolyte solution and is electrochemically active. The electrolyte solution may be the electrolyte solution according to any one of the above embodiments.

The positive electrode 12a may contain, for example, lithium nickel cobalt aluminum oxide (NCA), lithium manganese oxide spinel (LMO), lithium iron phosphate (LFP), lithium cobalt oxide (LCO), or lithium nickel cobalt manganese oxide (NCM) as the positive electrode active material. The positive electrode 12a may contain, for example, solid-state compounds used for, for example, nickel metal hydride batteries and nickel-cadmium batteries. The positive electrode 12a may contain, for example, Mg-doped $LiCoO_2$ and $LiNiO_2$.

The negative electrode 12b may contain, for example, carbon-based materials such as graphite, hard carbon, soft carbon, carbon nanotubes, and graphene as the negative electrode active material. The negative electrode 12b may contain, for example, titanium oxide such as lithium titanate and titanium dioxide. The negative electrode 12b may contain, for example, a transition metal compound containing, for example, iron, cobalt, copper, manganese, or nickel.

The separator 12c prevents a short circuit between the positive electrode 12a and the negative electrode 12b. For example, the separator 12c may have submicron-sized pores for passage of cations and anions. The separator 12c may be made of, for example, a porous insulating material. Examples of the porous insulating material used for the separator 12c include polyolefin and polyvinyl chloride.

The electricity generator 12 may be, for example, rectangular, square, circular, oval, or in any other shape as viewed in the first direction. In the present embodiment, the electricity generator 12 is rectangular as viewed in the first direction. The electricity generator 12 has, for example, a long side of 50 to 500 mm and a short side of 50 to 300 mm as viewed in the first direction. The electricity generator 12 has a thickness of, for example, 0.1 to 2 mm in the first direction.

In the present embodiment, the multiple unit cells 11 are electrically connected to one another in parallel. This can increase the capacity of the semisolid battery 1. The multiple unit cells 11 may be electrically connected to one another in series. This can increase the voltage across the semisolid battery 1.

The casing 13 electrically insulates the electricity generator 12 from the external environment to protect the electricity generator 12 from the external environment. The casing 13 entirely covers and accommodates the electricity generator 12. The casing 13 is, for example, a flat bag. The casing 13 includes, for example, two laminated films welded together. The casing 13 may include, for example, a laminated film shaped into a flat bag. The casing 13 may be, for example, rectangular, square, or in any other shape as viewed in the first direction. In the present embodiment, the casing 13 is rectangular as viewed in the first direction.

The casing 13 contains, for example, an insulating material. This can reduce the likelihood of a short circuit between the external environment and the electricity generator 12 through the casing 13, protecting the electricity generator 12 from the external environment. The casing 13 includes, for example, a resin material. The resin material may be, for example, polyethylene terephthalate or polyethylene.

The casing 13 may be, for example, multilayered. The casing 13 may contain, for example, a thermally adhesive resin material and a heat-resistant resin material. The thermally adhesive resin material melts, for example, at temperatures lower than 150 °C. The thermally adhesive resin material may be, for example, polyethylene or polypropylene. The heat-resistant resin material melts, for example, at temperatures of 150 to 300 °C inclusive. The heat-resistant resin material may be, for example, polyethylene terephthalate or polyethylene naphthalate.

The positive electrode terminal 14 and the negative electrode terminal 15 are used to output electricity charged in the electricity generator 12 from the casing 13. The positive electrode terminal 14 and the negative electrode terminal 15 extend from the inside to the outside of the casing 13.

The positive electrode terminal 14 is electrically connected to the positive electrode 12a. The positive electrode terminal 14 is electrically insulated from the negative electrode 12b and the negative electrode terminal 15. The positive electrode terminal 14 is made of, for example, a metal material. Examples of the metal material used for the positive electrode terminal 14 include aluminum.

The positive electrode terminal 14 includes a first positive electrode terminal portion 14a inside the casing 13 and a second positive electrode terminal portion 14b outside the casing 13. The first positive electrode terminal portion 14a may be in contact with the positive electrode 12a. The first positive electrode terminal portion 14a may be located between the casing 13 and the positive electrode 12a. The second positive electrode terminal portion 14b is connected to a connection terminal of the semisolid battery 1. The second positive electrode terminal portion 14b may be, for example, a rectangular or square plate, or in any other shape. In the present embodiment, the second positive electrode terminal portion 14b is rectangular as viewed in the first direction. The second positive electrode terminal portion 14b has, for example, a long side of 30 to 100 mm and a short side of 10 to 100 mm as viewed in the first direction. The second positive electrode terminal portion 14b has a thickness of, for example, 3 to 30 $\mu$m in the first direction.

The negative electrode terminal 15 is electrically connected to the negative electrode 12b. The negative electrode terminal 15 is electrically insulated from the positive electrode 12a and the positive electrode terminal 14. The negative electrode terminal 15 is made of, for example, a metal material. Examples of the metal material used for the negative electrode terminal 15 include copper.

Although not illustrated, the negative electrode terminal 15 includes a first negative electrode terminal portion inside the casing 13 and a second negative electrode terminal portion outside the casing 13, similarly to or in the same manner as the positive electrode terminal 14. The first negative electrode terminal portion may be in contact with the negative electrode 12b. The first negative electrode terminal portion may be located between the casing 13 and the negative electrode 12b. The second negative electrode terminal portion is connected to the connection terminal of the semisolid battery 1. The second negative electrode terminal portion may be, for example, a rectangular or square plate, or in any other shape. In the present embodiment, the second negative electrode terminal portion is rectangular as viewed in the first direction. The second negative electrode terminal portion has, for example, a long side of 30 to 100 mm and a short side of 10 to 100 mm as viewed in the first direction. The second negative electrode terminal portion has a thickness of, for example, 3 to 30 $\mu$m in the first direction.

The second positive electrode terminal portion 14b and the second negative electrode terminal portion may extend, for example, outward from one side of the casing 13 as viewed in the first direction. The second positive electrode terminal portion 14b and the second negative electrode terminal portion may extend outward from different sides of the casing 13 as viewed in the first direction.

The outer case 20 protects the cell stack 10 from the external environment. The external environment includes, for example, oxygen and moisture in the air. The outer case 20 entirely covers and accommodates the cell stack 10. The outer case 20 may be, for example, a cylinder, a bag, or in any other shape. The outer case 20 may include, for example, two members welded together into a bag. The outer case 20 may be, for example, a single member shaped into a bag. The outer case 20 may be, for example, rectangular, square, or in any other shape as viewed in the first direction. In the present embodiment, as illustrated in, for example, FIG. 1, the outer case 20 is rectangular as viewed in the first direction. The outer case 20 has its long-side and short-side directions substantially corresponding to the long-side and short-side directions of the cell stack 10 as viewed in the first direction. The outer case 20 has, for example, a long side of 50 to 600 mm and a short side of 50 to 400 mm as viewed in the first direction. The outer case 20 has its portion overlapping the cell stack 10 with a thickness of, for example, 50 to 300 $\mu$m as viewed in the first direction.

The semisolid battery 1 includes a connection terminal 30. The connection terminal 30 is used to output electricity charged in the cell stack 10 from the outer case 20. The connection terminal 30 includes a first connection terminal 31 and a second connection terminal 32. The first connection terminal 31 and the second connection terminal 32 extend from the inside to the outside of the outer case 20. The portion of the first connection terminal 31 inside the outer case 20 is bonded to the multiple positive electrode terminals 14 connected to one another. The portion of the second connection terminal 32 inside the outer case 20 is bonded to the multiple negative electrode terminals 15 connected to one another. The first connection terminal 31 and the second connection terminal 32 are made of, for example, a metal material. Examples of the metal material for the first connection terminal 31 and the second connection terminal 32 include copper and aluminum.

The outer case 20 contains, for example, an insulating material. This can reduce the likelihood of a short circuit between the external environment and the cell stack 10 through the outer case 20, protecting the cell stack 10 from the external environment. The insulating material may be, for example, a resin material such as polyethylene terephthalate or polyethylene.

The outer case 20 may be, for example, multilayered. The outer case 20 may be, for example, three-layered. The outer case 20 may include, for example, a first insulating layer, a moisture-proof layer, and a second insulating layer. The moisture-proof layer is located between the first insulating layer and the second insulating layer. The moisture-proof layer may be covered with the first insulating layer and the second insulating layer. The moisture-proof layer may be in direct contact with the first insulating layer and the second insulating layer.

The first insulating layer may be the outermost layer of the three layers in the outer case 20. The first insulating layer may contain a resin material such as polyethylene terephthalate or polyethylene naphthalate. The moisture-proof layer reduces oxygen or moisture penetrating the first insulating layer and reaching the second insulating layer. The moisture-proof layer may contain a metal material such as copper or aluminum. The second insulating layer may contain a resin material such as polypropylene or polypropylene.

The outer case 20 may include a liquid layer 21 to transmit external pressure to the unit cells 11. The liquid layer 21 is located between two adjacent unit cells 11. The liquid layer 21 may be in direct contact with the two adjacent unit cells 11. The liquid layer 21 can thus be located in any recess on the main surfaces 11a and the main surfaces 11b of the unit cells 11 to allow pressure to be applied uniformly to the two adjacent unit cells 11. In other words, this structure allows the two adjacent unit cells 11 to perform charging and discharging reactions without varying interface resistances. The unit cells 11 are thus less likely to deteriorate. The semisolid battery 1 can thus have a longer service life.

The liquid layer 21 may be located between the cell stack 10 and the outer case 20 as illustrated in, for example, FIG. 2. The cell stack 10 is thus less likely to be misaligned in the outer case 20. This reduces the likelihood of damage at the joint between the connection terminal 30 and the positive electrode terminals 14 or between the connection terminal 30 and the negative electrode terminals 15.

The liquid layer 21 may be, for example, an organic solvent. Examples of the organic solvent used for the liquid layer 21 include ethylene carbonate and γ-butyrolactone. The liquid layer 21 may be made of, for example, a flowable low-molecular-weight polymer material such as polyethylene oxide. The liquid layer 21 may contain, for example, a silicon-based polymer material such as silicone.

The liquid layer 21 may contain, for example, a water-absorbent material such as a water-absorbent polymer. The liquid layer 21 can thus absorb moisture entering the outer case 20 and reduce entry of moisture into the unit cells 11. The semisolid battery 1 can thus have a longer service life. Examples of the water-absorbent polymer used for the liquid layer 21 include polyacrylonitrile.

The liquid layer 21 may contain, for example, an inorganic material such as a porous filler. The liquid layer 21 can thus absorb moisture entering the outer case 20 and reduce entry of moisture into the unit cells 11. The semisolid battery 1 can thus have a longer service life. The porous filler used for the liquid layer 21 may be, for example, zeolite.

The liquid layer 21 may contains a metal filler reactive with oxygen and water. Oxygen and water entering the outer case 20 react with the metal filler and are thus less likely to enter the unit cells 11. The semisolid battery 1 can thus have a longer service life. Examples of the metal filler used for the liquid layer 21 include iron, copper, and aluminum.

The liquid layer 21 may be made of a material having higher thermal conductivity than an electrolyte solution used in the electricity generators 12. This facilitates transfer of heat generated in the unit cells 11 to the liquid layer 21. The unit cells 11 are thus less likely to accumulate heat. The semisolid battery 1 can thus have a longer service life.

The liquid layer 21 may be made of a material having higher viscosity than the electrolyte solution used in the electricity generators 12. The cell stack 10 is thus less likely to be misaligned in the outer case 20. This reduces the likelihood of damage at the joint between the connection terminal 30 and the positive electrode terminals 14 or between the connection terminal 30 and the negative electrode terminals 15. The semisolid battery 1 can thus have a longer service life.

The electrolyte solution according to one or more embodiments of the present disclosure may be implemented in forms 1 to 13 described below.

(1) An electrolyte solution, comprising:

a lithium electrolyte comprising lithium hexafluorophosphate;
a carbonate solvent comprising γ-butyrolactone and ethylene carbonate; and
an additive comprising at least one of maleic anhydride or lithium bis(oxalato)borate,
wherein the electrolyte solution comprises more γ-butyrolactone than ethylene carbonate.

(2) An electrolyte solution, comprising:

a lithium electrolyte comprising lithium bis(fluorosulfonyl)imide;
a carbonate solvent comprising γ-butyrolactone and ethylene carbonate; and
an additive comprising at least one of maleic anhydride or lithium bis(oxalato)borate,
wherein the electrolyte solution comprises more γ-butyrolactone than ethylene carbonate.

(3) The electrolyte solution according to (1) or (2), wherein
the carbonate solvent has a vapor pressure less than 0.1 kPa at 25 °C.
(4) The electrolyte solution according to any one of (1) to (3), wherein
the lithium ion electrolyte has a concentration of 0.6 to 1.4 mol/L.
(5) The electrolyte solution according to any one of (1) to (4), further comprising:
an additive being vinylene carbonate with a content of 1.0 to 6.0 wt%.
(6) The electrolyte solution according to any one of (1) to (4), further comprising:
an additive being biphenyl with a content of 1.0 to 4.0 wt%.
(7) The electrolyte solution according to any one of (1) to (6), wherein
the electrolyte solution comprises more lithium bis(oxalato)borate than maleic anhydride.
(8) The electrolyte solution according to any one of (1) to (7), wherein
the electrolyte solution comprises the lithium bis(oxalato)borate with a content of 1.0 to 4.0 wt%.
(9) The electrolyte solution according to any one of (1) to (8), wherein
the electrolyte solution comprises the maleic anhydride with a content of 0.4 to 1.6 wt%.
(10) The electrolyte solution according to any one of (1) to (9), wherein

the carbonate solvent further comprises propylene carbonate, and
a volume ratio of ethylene carbonate, γ-butyrolactone, and propylene carbonate in the electrolyte solution is expressed by

$$EC:GBL:PC = 0.5x:(100 - x):0.5x \ (5 \leq x \leq 55) \qquad (1)$$

where EC is a volume of ethylene carbonate, GBL is a volume of γ-butyrolactone, and PC is a volume of propylene carbonate.

(11) A secondary battery, comprising:

a negative electrode active material being graphite; and
the electrolyte solution according to any one of (1) to (10).

(12) A secondary battery, comprising:

a positive electrode active material being lithium iron phosphate; and
the electrolyte solution according to any one of (1) to (10).

(13) A semisolid battery, comprising:

a positive electrode active material and the electrolyte solution according to any one of (1) to (10); and
a negative electrode active material and the electrolyte solution according to any one of (1) to (10).

The electrolyte solution according to one or more embodiments of the present disclosure has a smaller composition change resulting from solvent volatilization and thus has less variation in the battery characteristics of a secondary battery and a semisolid battery.

Although one or more embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

REFERENCE SIGNS

1    electrochemical cell
10   cell stack
11   unit cell
11a  main surface
11b  other main surface
12   electricity generator
12a  positive electrode
12b  negative electrode
12c  separator
13   casing
14   positive electrode terminal
14a  first positive electrode terminal portion
14b  second positive electrode terminal portion
15   negative electrode terminal
20   outer case
30   connection terminal
31   first connection terminal
32   second connection terminal

**Claims**

1. An electrolyte solution, comprising:

   a lithium electrolyte comprising lithium hexafluorophosphate;
   a carbonate solvent comprising γ-butyrolactone and ethylene carbonate; and
   an additive comprising at least one of maleic anhydride or lithium bis(oxalato)borate,
   wherein the electrolyte solution comprises more γ-butyrolactone than ethylene carbonate.

2. An electrolyte solution, comprising:

   a lithium electrolyte comprising lithium bis(fluorosulfonyl)imide;
   a carbonate solvent comprising γ-butyrolactone and ethylene carbonate; and
   an additive comprising at least one of maleic anhydride or lithium bis(oxalato)borate,
   wherein the electrolyte solution comprises more γ-butyrolactone than ethylene carbonate.

3. The electrolyte solution according to claim 1 or claim 2, wherein
   the carbonate solvent has a vapor pressure less than 0.1 kPa at 25 °C.

4. The electrolyte solution according to any one of claims 1 to 3, wherein
   the lithium ion electrolyte has a concentration of 0.6 to 1.4 mol/L.

5. The electrolyte solution according to any one of claims 1 to 4, further comprising:
   an additive being vinylene carbonate with a content of 1.0 to 6.0 wt%.

6. The electrolyte solution according to any one of claims 1 to 4, further comprising:
   an additive being biphenyl with a content of 1.0 to 4.0 wt%.

7. The electrolyte solution according to any one of claims 1 to 6, wherein
   the electrolyte solution comprises more lithium bis(oxalato)borate than maleic anhydride.

8. The electrolyte solution according to any one of claims 1 to 7, wherein
   the electrolyte solution comprises the lithium bis(oxalato)borate with a content of 1.0 to 4.0 wt%.

9. The electrolyte solution according to any one of claims 1 to 8, wherein
   the electrolyte solution comprises the maleic anhydride with a content of 0.4 to 1.6 wt%.

10. The electrolyte solution according to any one of claims 1 to 9, wherein

the carbonate solvent further comprises propylene carbonate, and
a volume ratio of ethylene carbonate, $\gamma$-butyrolactone, and propylene carbonate in the electrolyte solution is expressed by

$$EC{:}GBL{:}PC = 0.5x{:}(100-x){:}0.5x \ (5 \leq x \leq 55) \qquad (1)$$

where EC is a volume of ethylene carbonate, GBL is a volume of $\gamma$-butyrolactone, and PC is a volume of propylene carbonate.

11. A secondary battery, comprising:

a negative electrode active material being graphite; and
the electrolyte solution according to any one of claims 1 to 10.

12. A secondary battery, comprising:

a positive electrode active material being lithium iron phosphate; and
the electrolyte solution according to any one of claims 1 to 10.

13. A semisolid battery, comprising:

a positive electrode comprising a positive electrode active material and the electrolyte solution according to any one of claims 1 to 10; and
a negative electrode comprising a negative electrode active material and the electrolyte solution according to any one of claims 1 to 10.

FIG. 1

FIG. 2

## INTERNATIONAL SEARCH REPORT

| International application No. |
| --- |
| **PCT/JP2022/044454** |

### A. CLASSIFICATION OF SUBJECT MATTER

*H01M 10/0569*(2010.01)i; *H01M 4/133*(2010.01)i; *H01M 4/136*(2010.01)i; *H01M 4/58*(2010.01)i; *H01M 4/587*(2010.01)i; *H01M 4/62*(2006.01)i; *H01M 10/052*(2010.01)i; *H01M 10/0567*(2010.01)i; *H01M 10/0568*(2010.01)i
FI: H01M10/0569; H01M10/0568; H01M10/0567; H01M4/587; H01M4/58; H01M4/133; H01M4/136; H01M4/62 Z; H01M10/052

According to International Patent Classification (IPC) or to both national classification and IPC

### B. FIELDS SEARCHED

Minimum documentation searched (classification system followed by classification symbols)

H01M10/0569; H01M4/133; H01M4/136; H01M4/58; H01M4/587; H01M4/62; H01M10/052; H01M10/0567; H01M10/0568

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2016-100054 A (NATIONAL INST. OF ADVANCED INDUSTRIAL SCIENCE AND TECHNOLOGY) 30 May 2016 (2016-05-30) claims, paragraphs [0041]-[0054], examples | 1, 3-4, 8 |
| Y | | 2, 5-7, 9, 12-13 |
| A | | 10-11 |
| Y | JP 2014-203748 A (NIPPON SHOKUBAI CO., LTD.) 27 October 2014 (2014-10-27) paragraph [0015] | 2 |
| Y | JP 2005-135895 A (SAMSUNG SDI CO., LTD.) 26 May 2005 (2005-05-26) claims, paragraphs [0024], [0028]-[0037], examples 1-9 | 1-6, 9-13 |
| Y | JP 2014-522077 A (BASF CORP.) 28 August 2014 (2014-08-28) paragraphs [0026], [0040] | 6, 12 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 December 2022** | **17 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/044454** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 4-355065 A (MATSUSHITA ELECTRIC IND. CO., LTD.) 09 December 1992 (1992-12-09)<br>    paragraphs [0010], [0013], [0020] | 1-7, 9-13 |
| Y | JP 2014-529876 A (24M TECHNOLOGIES, INC.) 13 November 2014 (2014-11-13)<br>    claims | 13 |

Form PCT/ISA/210 (second sheet) (January 2015)

**INTERNATIONAL SEARCH REPORT**
Information on patent family members

International application No.

**PCT/JP2022/044454**

| Patent document cited in search report | | | Publication date (day/month/year) | Patent family member(s) | Publication date (day/month/year) |
|---|---|---|---|---|---|
| JP | 2016-100054 | A | 30 May 2016 | US 2017/0338511 A1 claims, paragraphs [0047]-[0065], example WO 2016/080128 A1 claims, paragraphs [0041]-[0054], examples CN 107112581 A | |
| JP | 2014-203748 | A | 27 October 2014 | (Family: none) | |
| JP | 2005-135895 | A | 26 May 2005 | US 2005/0095507 A1 claims, paragraphs [0032], [0037]-[0049], examples 1-9 EP 1528617 A2 claims, paragraphs [0025], [0030]-[0042], examples 1-9 KR 10-2005-0040974 A CN 1612383 A | |
| JP | 2014-522077 | A | 28 August 2014 | US 2014/0038059 A1 paragraphs [0028], [0047] WO 2012/142060 A2 paragraphs [0025], [0039] KR 10-2014-0034179 A CN 103827416 A | |
| JP | 4-355065 | A | 09 December 1992 | US 5296319 A pages 1-2 | |
| JP | 2014-529876 | A | 13 November 2014 | WO 2013/036801 A1 claims | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013101900 A